(19) Europäisches Patentamt
European Patent Office
Office européen des brevets

(11) **EP 3 432 319 A1**

(12) **EUROPEAN PATENT APPLICATION**
published in accordance with Art. 153(4) EPC

(43) Date of publication:
**23.01.2019 Bulletin 2019/04**

(51) Int Cl.:
**H01B 13/00** $^{(2006.01)}$      **C03B 8/00** $^{(2006.01)}$
**C03C 3/32** $^{(2006.01)}$      **C03C 4/14** $^{(2006.01)}$
**C03C 10/16** $^{(2006.01)}$      **H01M 10/0562** $^{(2010.01)}$

(21) Application number: **17766665.8**

(22) Date of filing: **14.03.2017**

(86) International application number:
**PCT/JP2017/010153**

(87) International publication number:
**WO 2017/159666 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.03.2016 JP 2016049546**

(71) Applicant: **Idemitsu Kosan Co., Ltd**
**Tokyo 100-8321 (JP)**

(72) Inventor: **MAKINO, Takeshi**
**Sodegaura-shi**
**Chiba 299-0293 (JP)**

(74) Representative: **Hoffmann Eitle**
**Patent- und Rechtsanwälte PartmbB**
**Arabellastraße 30**
**81925 München (DE)**

(54) **METHOD FOR PRODUCING SOLID ELECTROLYTE**

(57)      Provided is a solid electrolyte having a high ion conductivity and excellent in battery performance not going through a step of removing water such as a drying step, while simplifying the production process and reducing the production cost. Specifically, provided is a method for producing a sulfide-based solid electrolyte, including causing a reaction of an alkali metal sulfide and a specific substance through treatment of mixing, stirring, grinding or a combination thereof, in the absence of a solvent or in a solvent except for water.

**Description**

Technical Field

The present invention relates to a method for producing a solid electrolyte.

Background Art

In the field of all-solid batteries, heretofore, a sulfide-based solid electrolyte material has been known. For example, PTL 1 reports producing a sulfide glass by reaction of lithium sulfide and phosphorus sulfide followed by heat-treating the sulfide glass to give a glass ceramic electrolyte having a high ion conductivity (for example, see PTL 1). However, a higher ion conductivity is desired, and it is reported to produce a sulfide glass by reaction of lithium halide, lithium sulfide and phosphorus sulfide and to heat-treat the sulfide glass to give a glass ceramic electrolyte having a high ion conductivity (for example, see PTL 2).

The lithium halide contained in these raw material compositions is produced using a raw material that is an aqueous solution in the production process, or is produced through reaction in water, and therefore the lithium halide is produced as a hydrate thereof (for example, see PTLs 3 to 6). When the lithium halide to be used as a raw material for a solid electrolyte contains water, the ion conductivity of the sulfide-based solid electrolyte may lower, and therefore, water must be removed from the lithium halide.

Citation List

Patent Literature

PTL 1: JP-2005-228570A
PTL 2: JP-2013-201110A
PTL 3: JP-2013-103851A
PTL 4: JP-2013-256416A
PTL5: JP-2014-65637A
PTL6: JP-2014-65638A

Brief Description of Drawings

Fig. 1 is an X-ray analysis spectrum of the amorphous sulfide-based solid electrolyte obtained in Example 1.
Fig. 2 is an X-ray analysis spectrum of the crystalline sulfide-based solid electrolyte obtained in Example 1.
Fig. 3 is a schematic view of the apparatus used in Examples.

Summary of Invention

Technical Problem

If existing in a raw material for a solid electrolyte, water greatly lowers ion conductivity to cause a problem that an excellent solid electrolyte could not be obtained. On the other hand, a lithium halide to be the raw material is produced using water as a medium, heretofore as described in PTLs 3 to 6, and therefore in any case, a step of removing water is necessary. Specifically, water removal is carried out according to a method of baking at 300 to 440°C in an inert gas atmosphere or in vacuum (PTL 3), or drying in azeotropy with an organic solvent (PTL 4), or heating under reduced pressure (PTLs 5 and 6).

However, water removal is not easy, and as described above, various ingenuities are necessary (PTLs 3 to 6). For example, when a drying step is carried out under reduced pressure with heating, the production process is complicated and large-scaled to cause a problem of time and money. In that manner, a solid electrolyte using a lithium halide as a raw material has advantages of high ion conductivity and excellent battery performance, but on the other hand, the energy for water removal is great and the production process is complicated and large-scaled to lead to higher costs, and as a result, the solid electrolyte is expensive.

The present invention has been made in consideration of the situation as above, and an object thereof is to provide a method for producing a sulfide-based solid electrolyte in which the production process is simplified.

Solution to Problem

For solving the above-mentioned problems, the present inventors have assiduously studied and, as a result, have found that the problems can be solved by the following invention.

[1] A method for producing a sulfide-based solid electrolyte, including causing a reaction of an alkali metal sulfide and a substance represented by the following formula (1) through treatment of mixing, stirring, grinding or a combination thereof, in the absence of a solvent or in a solvent except for water:

$$X_2 \dots (1)$$

wherein X represents a halogen element.
[2] A method for producing a sulfide-based solid electrolyte, including causing a reaction of an alkali metal sulfide, a phosphorus compound and a substance represented by the following formula (1) through treatment of mixing, stirring, grinding or a combination thereof, in the absence of a solvent or in a solvent except for water:

$$X_2 \dots (1)$$

wherein X represents a halogen element.
[3] The method for producing a sulfide-based solid electrolyte according to the above [1] or [2], wherein the treatment of mixing, stirring, grinding or a combination thereof is carried out using a grinding machine.
[4] The method for producing a sulfide-based solid electrolyte according to the above [3], wherein the grinding machine is a container-driven grinding machine or a medium-stirring grinding machine.
[5] The method for producing a sulfide-based solid electrolyte according to any one of the above [2] to [4], wherein the phosphorus compound is phosphorus sulfide.
[6] The method for producing a sulfide-based solid electrolyte according to any one of the above [1] to [5], wherein the alkali metal sulfide is at least one selected from lithium sulfide and sodium sulfide.
[7] The method for producing a sulfide-based solid electrolyte according to any one of the above [1] to [6], wherein the substance is at least one selected from iodine and bromine.
[8] The method for producing a sulfide-based solid electrolyte according to any one of the above [2] to [7], wherein the content of the substance $X_2$ relative to the total amount of the alkali metal sulfide, the phosphorus compound and the substance $X_2$ is from 1 to 50 mol%.
[9] The method for producing a sulfide-based solid electrolyte according to any one of the above [2] to [8], wherein the alkali metal sulfide is lithium sulfide, the phosphorus compound is diphosphorus pentasulfide, and the ratio of the molar number of lithium sulfide excluding the same molar number of lithium sulfide as the molar number of the substance $X_2$ relative to the total molar number of lithium sulfide and diphosphorus pentasulfide excluding the same molar number of lithium sulfide as the molar number of the substance $X_2$ is from 60 to 90%.
[10] The method for producing a sulfide-based solid electrolyte according to any one of the above [1] to [9], including causing the reaction in a solvent in which the solubility of sulfur is 0.01% by mass or more.
[11] The method for producing a sulfide-based solid electrolyte according to the above [10], wherein the solvent is an organic solvent.
[12] The method for producing a sulfide-based solid electrolyte according to the above [10] or [11], wherein the solvent is a hydrocarbon solvent.

Advantageous Effects of Invention

According to the present invention, there can be provided a method for producing a sulfide-based solid electrolyte in which the production process is simplified.

Description of Embodiments

Embodiments of the present invention (which may be hereinafter referred to as "the present embodiments") are described below.

The method for producing a sulfide-based solid electrolyte of this embodiment is a method for producing a sulfide-based solid electrolyte, including causing a reaction of an alkali metal sulfide and a substance represented by the following formula (1) through treatment of mixing, stirring, grinding or a combination thereof, in the absence of a solvent or in a solvent except for water:

$$X_2 \ldots (1)$$

wherein X represents a halogen element.

The sulfide-based solid electrolyte is a solid electrolyte having sulfur as an indispensable component, and means an electrolyte that maintains a solid form at 25°C in a nitrogen atmosphere.

The sulfide-based solid electrolyte includes both an amorphous sulfide-based solid electrolyte and a crystalline sulfide-based solid electrolyte having a crystal structure. These sulfide-based solid electrolytes will be described in detail hereinunder.

The sulfide-based solid electrolyte preferably contains sulfur and phosphorus, more preferably contains at least one selected from lithium and sodium, and sulfur and phosphorus, and even more preferably contains lithium, sulfur and phosphorus. Specifically, the sulfide-based solid electrolyte preferably has lithium ion conductivity and sodium ion conductivity.

[In the absence of solvent, or in solvent except for water]

In the production method of this embodiment, an alkali metal sulfide and a substance need to be reacted in the absence of a solvent or in a solvent except for water. Preferably, the reaction is carried out in an inert gas atmosphere such as nitrogen or argon.

[Alkali Metal Sulfide]

The alkali metal sulfide is preferably granular.

Here, the mean particle size ($D_{50}$) of the alkali metal sulfide particles is preferably 10 $\mu$m or more and 2000 $\mu$m or less, more preferably 30 $\mu$m or more and 1500 $\mu$m or less, even more preferably 50 $\mu$m or more and 1,000 $\mu$m or less. In this description, the mean particle size ($D_{50}$) means a particle size to reach 50% of all the particles as sequentially integrated from the particles having a smallest particle size on the particle size distribution cumulative curve drawn with particles, and the volumetric distribution is, for example, the mean particle size that can be measured using a laser diffraction/scattering particle size distribution measuring device.

Preferred examples of the alkali metal sulfide for use in this embodiment include lithium sulfide ($Li_2S$), sodium sulfide ($Na_2S$), potassium sulfide ($K_2S$), rubidium sulfide ($Rb_2S$), and cesium sulfide ($Cs_2S$). In consideration of the fact that when an alkali metal having a smaller molecular weight is used, the ion conductivity of the resultant sulfide-based solid electrolyte tends to increase, lithium sulfide ($Li_2S$) and sodium sulfide ($Na_2S$) are preferred, and lithium sulfide ($Li_2S$) is more preferred.

One alone of these alkali metal sulfides may be used singly or plural kinds thereof may be used in combination, and in the case where plural kinds are used as combined, a combination of lithium sulfide ($Li_2S$) and sodium sulfide ($Na_2S$) is preferred from the viewpoint of increasing ion conductivity. Sodium is an alkali metal whose atomic weight is larger than that of lithium, and therefore in consideration of the fact that, using a light alkali metal, the ion conductivity of the resultant sulfide-based solid electrolyte tends to increase, using lithium sulfide ($Li_2S$) singly is especially preferred.

Preferably, the amount of water that may be contained as an impurity in the alkali sulfide is small.

The alkali metal sulfide usable in this embodiment is as described above, and an example of a method for producing lithium sulfide is described below.

Lithium sulfide can be produced, for example, according to the method described in JP-7-330312A, JP-9-283156A, JP-2010-163356A, and JP-9-278423A.

Specifically, lithium hydroxide is reacted with hydrogen sulfide in a hydrocarbon-based organic solvent at 70°C to 300°C to give lithium hydrosulfide, and next, the reaction liquid is dehydrosulfurized to give lithium sulfide (JP-2010-163356A). Alternatively, lithium hydroxide is reacted with hydrogen sulfide at 130°C or higher and 445°C or lower to synthesize lithium sulfide (JP-9-278423A).

[Substance $X_2$]

The substance $X_2$ includes fluorine ($F_2$), chlorine ($Cl_2$), bromine ($Br_2$), and iodine ($I_2$), and above all, chlorine

($Cl_2$), bromine ($Br_2$), and iodine ($I_2$) are preferred, and one alone or plural kinds thereof may be used either singly or as combined. Using the above as the substance $X_2$ increases the probability of producing an electrolyte having a high ion conductivity. From the same viewpoint, the substance $X_2$ is more preferably bromine ($Br_2$), or iodine ($I_2$).

Since the substance $X_2$ is used as a raw material, it is unnecessary to use an alkali metal halide as a raw material, and in particular, the step of removing water necessary in producing lithium bromide (LiBr) and lithium iodide (LiI) can be omitted, and accordingly, a high-performance solid electrolyte can be provided while the production process is simplified and the production cost is reduced.

Preferably, the amount of water as an impurity in the substance $X_2$ is small.

[Phosphorus Compound]

In this embodiment, preferably, an alkali metal sulfide and a phosphorus compound and a substance $X_2$ are reacted.

Preferred examples of the phosphorus compound include phosphorus sulfides such as diphosphorus trisulfide ($P_2S_3$), and diphosphorus pentasulfide ($P_2S_5$); and phosphate compounds such as sodium phosphate ($Na_3PO_4$), and lithium phosphate ($Li_3PO_4$). Above all, phosphorus sulfides are preferred, and diphosphorus pentasulfide ($P_2S_5$) is more preferred. The phosphorus compound may include an elemental phosphorus. The phosphorus compounds such as diphosphorus pentasulfide ($P_2S_5$) that are industrially produced and sold are readily available. These phosphorus compounds may be used alone or plural kinds thereof may be used in combination.

[Other Raw Materials]

In this embodiment, so far as the above-mentioned alkali metal sulfide and the substance $X_2$, preferably the alkali metal sulfide, the phosphorus compound and the substance $X_2$ are used, any other raw materials than the above may also be contained.

For example, using a sodium halide such as sodium iodide (NaI), sodium fluoride (NaF), sodium chloride (NaCl) or sodium bromide (NaBr), or a lithium compound such as lithium oxide ($Li_2O$), or lithium carbonate ($Li_2CO_3$), an alkali metal element (lithium (Li)) may be supplied.

Using a metal sulfide such as silicon sulfide ($SiS_2$), germanium sulfide ($GeS_2$), boron sulfide ($B_2S_3$), gallium sulfide ($Ga_2S_3$), tin sulfide (SnS or $SnS_2$), aluminum sulfide ($Al_2S_3$), or zinc sulfide (ZnS), a sulfur atom may be supplied.

Using phosphorus halides such as various phosphorus fluorides ($PF_3$, $PF_5$), various phosphorus chlorides ($PCl_3$, $PCl_5$, $P_2Cl_4$), phosphorus oxychloride ($POCl_3$), various phosphorus bromides ($PBr_3$, $PBr_5$), phosphorus oxybromide ($POBr_3$), and various phosphorus iodides ($PI_3$, $P_2I_4$), a phosphorus element and a halogen element may be supplied at the same time. In addition, using a thiophosphoryl halide such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2S$), or thiophosphoryl dibromofluoride ($PSBr_2F$), a phosphorus element, a sulfur element and a halogen element may be supplied at the same time.

Using a metal halide such as an aluminum halide, a silicon halide, a germanium halide, an arsenic halide, a selenium halide, a tin halide, an antimony halide, a tellurium halide or a bismuth halide, a halogen element may be supplied.

In addition, for example, within a range not detracting from the advantageous effects of the present invention, a lithium halide such as lithium fluoride (LiF), lithium chloride (LiCl), lithium bromide (LiBr) or lithium iodide (LiI) may be used to supply a lithium element and a halogen element.

[Blending Ratio of Raw Materials]

The proportion of each raw material in all raw materials is not specifically limited, and for example, in the case where lithium sulfide ($Li_2S$) and diphosphorus pentasulfide ($P_2S_5$) are used as raw materials, the ratio of the molar number of lithium sulfide ($Li_2S$) excluding the same molar number of lithium sulfide ($Li_2S$) as the molar number of the substance $X_2$, relative to the total molar number of lithium sulfide ($Li_2S$) and diphosphorus pentasulfide ($P_2S_5$) excluding the same molar number of lithium sulfide ($Li_2S$) as the molar number of the substance $X_2$, is preferably within a range of 60 to 90%, more preferably within a range of 65 to 85%, even more preferably within a range of 68 to 82%, still more preferably within a range of 72 to 78%, and especially preferably within a range of 73 to 77%. This is because, falling within the range of such proportion, a sulfide-based solid electrolyte having a high ion conductivity can be obtained.

In the case where an alkali metal sulfide, a phosphorus compound and a substance $X_2$ are used as raw materials, the content of the substance $X_2$ relative to the total amount of the alkali metal sulfide, the phosphorus compound and the substance $X_2$ is preferably 1 to 50 mol%, more preferably 2 to 40 mol%, even more preferably 3 to 25 mol%, and still more preferably 3 to 15 mol%.

In the case where an alkali metal sulfide, a phosphorus compound, a substance $X_2$, and a lithium halide are used as raw materials, the content ($\alpha$ mol%) of the substance $X_2$ and the content ($\beta$ mol%) of the lithium halide relative to the total amount of these preferably satisfy the following expression (2), more preferably satisfy the following expression (3), even more preferably satisfy the following expression (4), and further more preferably satisfy the following expression (5).

$$2 \leq 2\alpha + \beta \leq 100 \qquad ... (2)$$

$$4 \leq 2\alpha + \beta \leq 80 \qquad ... (3)$$

$$6 \leq 2\alpha + \beta \leq 50 \qquad ... (4)$$

$$6 \leq 2\alpha + \beta \leq 30 \qquad ... (5)$$

In the case where two kinds of halogen elements are contained in the raw material and where the molar number of one halogen atom in the raw material is represented by A1 and the molar number of the other halogen atom therein is represented by A2, preferably A1/A2 is (1 to 99)/(99 to 1), more preferably 10/90 to 90/10, even more preferably 20/80 to 80/20, and further more preferably 30/70 to 70/30.

In the case where a bromine element and an iodine element are contained as halogen atoms in the raw material and where the molar number of the bromine element in the raw material is represented by B1 and the molar number of the iodine element in the raw material is represented by B2, preferably B1/B2 is (1 to 99)/(99 to 1), more preferably 15/85 to 90/10, even more preferably 20/80 to 80/20, further more preferably 30/70 to 75/25, and especially preferably 35/65 to 75/25.

[Solvent]

In the production method of this embodiment, an alkali metal sulfide, a substance $X_2$ and others may be reacted in a solvent. Regarding the solvent, one in which the solubility of sulfur is 0.01% by mass or more is preferably used, more preferably 0.03% by mass or more, even more preferably 0.05% by mass or more, and especially preferably 0.1% by mass or more. The upper limit of the sulfur solubility is not specifically limited, but is, for example, 60% by mass or less, 55% by mass or less, or 10% by mass or less.

Here, the sulfur solubility is a value measured as follows.

(Measurement of Sulfur Solubility)

50 mL of a solvent is added to 10 g of sulfur, conditioned at 25°C in an oil bath, and stirred for 2 hours. Subsequently, the supernatant is separated using a cannula (transport pipe) equipped with a glass filter. The separated supernatant is vacuumed to give dry sulfur. From the mass of the dry sulfur and the mass of the solvent in which the dry sulfur has dissolved, the sulfur solubility (% by mass) is calculated.

In the production method of this embodiment, as described above, a substance $X_2$ (for example, iodine ($I_2$), bromine ($Br_2$)) is used as a raw material in place of the lithium halide such as lithium iodide (LiI) or lithium bromide (LiBr) heretofore used for producing a high-performance solid electrolyte therefore evading water removal in the production process for the lithium halide, and consequently a high-performance solid electrolyte can be provided while the production process is simplified and the production cost is reduced. Consequently, the alkali metal component that has heretofore been supplied as a lithium halide must be supplied as an alkali metal sulfide, and as a result, sulfur may form as a side product.

In the production method of this embodiment, preferably, a solvent having a sulfur solubility of 0.01% by mass or more is used, and therefore the raw materials can be reacted more smoothly and any excessive sulfur component, if generated, can be removed, consequently enhancing the production efficiency. In addition, sulfur dissolves in the solvent, and therefore the unreacted sulfur can be readily removed from the sulfide-based solid electrolyte, and a sulfide-based solid electrolyte not containing sulfur as an impurity or containing little sulfur can be provided.

In the case where a solvent is used, preferably, the substance $X_2$ dissolves therein. Accordingly, a risk of direct contact between the substance $X_2$ and the production apparatus such as the reactor can be reduced so that the corrosion of the apparatus can be prevented more effectively. In addition, since a solid alkali metal sulfide and the substance $X_2$

existing in the solvent are reacted, the reaction speed increases and therefore a sulfide-based solid electrolyte can be produced more efficiently.

Consequently, as the solvent, one capable of dissolving the substance $X_2$, preferably one in which the solubility of the substance $X_2$ is preferably 0.01% by mass or more is used, more preferably 0.03% by mass or more, even more preferably 0.05% by mass or more, especially preferably 0.1% by mass or more. The upper limit of the sulfur solubility is not specifically limited, but is, for example, 60% by mass or less, 55% by mass or less, or 10% by mass or less.

Here, the solubility of the substance $X_2$ is a value measured according to the following measurement method.

(Measurement of Solubility of Substance $X_2$)

A substance $X_2$ (2 g) is dissolved in 3 mL of a solvent, and stirred at room temperature (25°C) for 20 minutes. 0.1 g of the supernatant is weighed, 1 g of an aqueous sodium thiosulfate solution (10% by mass, $Na_2S_2O_3$) is added to the supernatant and shaken for about 1 minute to confirm disappearance of the color of the solution. The iodine concentration of the solution is quantified through ICP emission spectrometric analysis (high-frequency inductively-coupled plasma emission spectrometry) to calculate the solubility of the substance $X_2$.

For example, when the substance $X_2$ is bromine ($Br_2$), iodine ($I_2$), or chlorine ($Cl_2$), or when $X_2$ is bromine ($Br_2$), or iodine ($I_2$), and especially when $X_2$ is bromine ($Br_2$), corrosion may be lowered.

In addition, the substance $X_2$ dissolves in the solvent, and therefore the unreacted substance $X_2$ can be readily removed from the sulfide-based solid electrolyte, and a sulfide-based solid electrolyte not containing the substance $X_2$ as an impurity or containing little the substance can be provided.

The solvent is preferably one hardly dissolving an alkali metal sulfide, for example, one in which the solubility of an alkali metal sulfide is 1% by mass or less. Using such a solvent, the dissolution of an alkali metal sulfide in the solvent reduces and therefore, an alkali metal sulfide can be consumed more efficiently for reaction with the substance $X_2$. The solubility of the alkali metal sulfide is more preferably 0.5% by mass or less, even more preferably 0.1% by mass or less, further more preferably 0.07% by mass or less. There is no limitation on the lower limit of the solubility of the alkali metal sulfide.

Preferred examples of such a solvent include hydrocarbon solvents such as aliphatic hydrocarbon solvents, alicyclic hydrocarbon solvents, and aromatic hydrocarbon solvents; and carbon atom-containing solvents such as solvents containing a carbon atom and a hetero atom.

Examples of the aliphatic hydrocarbon solvent include hexane, pentane, 2-ethylhexane, heptane, octane, decane, undecane, dodecane, and tridecene; examples of the alicyclic hydrocarbon solvent include cyclohexane, and methylcyclohexane; examples of the aromatic hydrocarbon solvent include benzene, toluene, xylene, mesitylene, ethylbenzene, tert-butylbenzene, trifluoromethylbenzene, and nitrobenzene; and examples of the solvent containing a carbon atom and a hetero atom include carbon disulfide, diethyl ether, dibutyl ether, and tetrahydrofuran.

Among these, hydrocarbon solvents are preferred, aromatic hydrocarbon solvents are more preferred, toluene, xylene and ethylbenzene are even more preferred, and toluene is especially preferred. Water is unfavorable as a solvent as it may worsen the performance of the solid electrolyte.

In the case where bromine ($Br_2$) is used as the substance $X_2$, from the viewpoint of efficiently attaining the reaction between the bromine ($Br_2$) and the other raw material, especially among saturated aliphatic hydrocarbon solvents, saturated alicyclic hydrocarbon solvents and aromatic hydrocarbon solvent, those substituted with an electrophilic group, for example, tert-butylbenzene, trifluoromethylbenzene and nitrobenzene are preferably used. Here, the saturated aliphatic hydrocarbon solvents are preferably linear, saturated aliphatic hydrocarbon solvents.

The amount of the solvent to be used is preferably such that the total amount of the raw materials could be 0.01 to 1 kg in 1 liter of the solvent, more preferably 0.05 to 0.8 kg, even more preferably 0.2 to 0.7 kg. When the amount of the solvent used falls within the above range, the raw materials can be slurry and can be more smoothly reacted, and in the case here sulfur forms as a side product, it may be more readily removed, and in addition, solvent removal, if needed, can be attained with ease.

[Mixing, Stirring and Grinding]

When the raw materials of an alkali metal sulfide and a substance $X_2$ are reacted in the production method for a sulfide-based solid electrolyte of this embodiment, for example, these raw materials may be mixed, stirred or ground or may be processed through any of these treatments as combined, for the purpose of increasing the reaction speed to thereby efficiently produce a sulfide-based solid electrolyte.

The mixing method is not specifically limited. For example, raw materials and optionally a solvent may be put into a production device where the solvent and the raw materials can be mixed, and mixed therein. The production device is not specifically limited so far as raw materials and a solvent, if any, can be mixed therein, and for example, a medium-assisted grinding machine may be used.

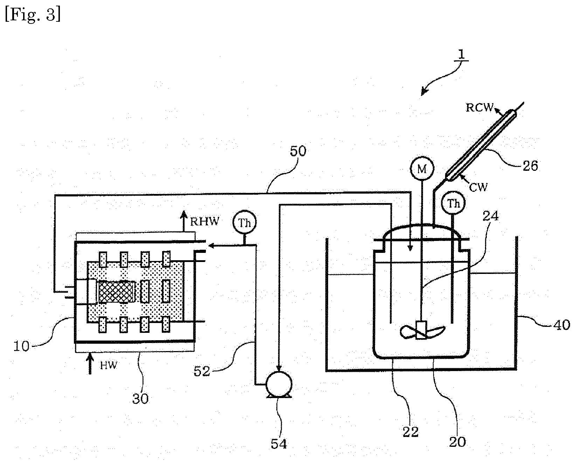

The medium-assisted grinding machine may be roughly grouped into a container-driven grinding machine and a medium-stirring grinding machine. The container-driven grinding machine includes a stirring tank, a grinding tank, and a ball mill and a bead mill including these as combined (for example, one having a configuration as shown in Fig. 3, as used in Examples). The medium-stirring grinding machine includes various types of grinding machines of an impact grinding machine such as a cutter mill, a hammer mill and a pin mill; a tower-type grinding machine such as a tower mill; a stirring tank grinding machine such as an attritor, an aquamizer, and a sand grinder; a fluid tank grinding machine such as a viscomill, and a pear mill; a fluid tube grinding machine; an annular type grinding machine such as a co-ball mill; a continuous dynamic grinding machine; and a monoaxial or multiaxial kneading machine.

These grinding machines may be appropriately selected depending on the intended size thereof, and for a relatively small-size system, a container-driven grinding machine such as a ball mill or a bead mill may be used, while for large-scale or industrial-scale mass production, the other types of grinding machines are preferably used.

When these grinding machines are used, raw materials and a solvent, if any, and also grinding media are put thereinto, and then the machine is driven to attain mixing, stirring and grinding therein. Here, raw materials, a solvent and grinding media are put into the machine, but the order of putting them thereinto is not limited.

In the production method for a sulfide-based solid electrolyte of this embodiment, raw material and a solvent, if any, are mixed, and therefore the raw materials can be brought into contact more readily to promote the reaction therebetween to give a sulfide-based solid electrolyte. From the viewpoint of promoting the contact between raw materials to give efficiently a sulfide-based solid electrolyte, it is desirable that a solvent and raw materials are mixed, and further stirred and ground, or processed for treatment of stirring and grinding. From the viewpoint of promoting the contact between raw materials, in particular, a treatment including grinding, namely a treatment of grinding, or stirring and grinding is preferably carried out. In the treatment of grinding, the surfaces of the raw materials may be cut off to make new surfaces thereof exposed out, and as a result, the new surfaces may be brought into contact with the surfaces of the other raw material to further promote the reaction between the raw materials to efficiently produce a sulfide-based solid electrolyte.

For example, a device of a ball mill or a bead mill is described as an example. In these mills, the grain size of the media therein such as balls or beads (balls generally have a size of $\phi$2 to 20 mm or so, and beads generally have a size of $\phi$0.02 to 2 mm or so, the material thereof (for example, metals such as stainless, chrome steel, or tungsten carbide; ceramics such as zirconia or silicon nitride; minerals such as agate), the rotation number of the rotor and the time may be selected to attain mixing, stirring or grinding, or a combined treatment thereof, and the particle size of the resultant sulfide-based solid electrolyte can be controlled.

In this embodiment, these conditions are not specifically limited. For example, using a ball mill, especially a planetary ball mill, and using balls of ceramics, above all zirconia balls having a size of $\phi$1 to 10 mm, raw materials may be stirred and ground at a rotor rotation number of 300 to 1,000 rpm for 0.5 to 100 hours.

The temperature in mixing, stirring and grinding is not specifically limited, and may be, for example, 20 to 80°C.

In this embodiment, after raw materials and a solvent, if any, have been mixed, raw materials may be further added thereto and mixed, and this operation may be repeated twice or more.

In the case where raw materials and a solvent are mixed and stirred, additional raw materials may be further added and mixed or mixed and stirred during mixing and stirring them and/or after that, and this operation may be repeated twice or more. For example, raw materials and a solvent are put into a ball mill or a bead mill, and mixed and stirred therein, and during the mixing and stirring, additional raw materials may be further put into the container, and after mixing and stirring them (after the mixing and stirring is once stopped), raw materials may be put into the container, and mixing and stirring them may be restarted, or during mixing and stirring, and after that, additional raw materials may be put into the container.

Also in the case where raw materials and solvent are mixed and ground, or stirred and ground, additional raw materials may be further added like in the above-mentioned case of stirring.

In that manner, by further adding raw materials, the frequency of optional treatment of solvent removal or the like may be reduced, and accordingly, a sulfide-based solid electrolyte can be produced more efficiently.

In the case where additional raw materials are further added, if desired, a solvent may also be added, but the solvent will have to be removed in obtaining the intended sulfide-based solid electrolyte, the amount of the solvent to be additionally added is preferably minimized.

[Removal of Solvent]

In the case where a solvent is used, the sulfide-based solid electrolyte contains the solvent, and therefore preferably, the solvent is removed. By removing the solvent, the side product sulfur may also be removed.

The solvent removal may be carried out according to a method where the solvent-containing sulfide-based solid electrolyte is once transferred to a container, and after the solid electrolyte has deposited therein, the supernatant solvent is removed.

The solvent may be removed by drying, which may be combined with removal of the supernatant solvent. In this case, for example, the precipitated solid electrolyte is put on a heating device such as a hot plate, and then heated thereon at 50 to 90°C to vaporize the solvent for solvent removal.

Depending on the solvent, reduced-pressure drying may be carried out using a vacuum pump or the like at a temperature of 90 to 110°C or so. For example, this is effective for the case where an aromatic hydrocarbon solvent such as xylene or ethylbenzene is used.

The solvent to be used in this embodiment is one capable of dissolving sulfur, namely, the solubility of sulfur therein is 0.1% by mass or more. Accordingly, using a solvent in the production method of this embodiment is advantageous in that sulfur that may be an impurity could be removed through relatively easy treatment of solvent removal.

[Amorphous Sulfide-Based Solid Electrolyte]

The resultant sulfide-based solid electrolyte is an amorphous sulfide-based solid electrolyte containing at least an alkali metal element, a sulfur element and a halogen element, preferably containing an alkali metal element, a sulfur element, a phosphorus element and a halogen element. In this description, the amorphous sulfide-based solid electrolyte means that the X-ray diffraction pattern thereof in X-ray diffractometry is a halo pattern not substantially showing any other peak than the materials-derived peaks, irrespective of the presence or absence of peaks derived from the raw materials of the solid electrolyte.

The amorphous sulfide-based solid electrolyte has a high ion conductivity and can increase battery output.

Typical examples of the amorphous sulfide-based solid electrolyte include $Li_2S$-$P_2S_5$-LiI, $Li_2S$-$P_2S_5$-LiCl, $Li_2S$-$P_2S_5$-LiBr, $Li_2S$-$P_2S_5$-LiI-LiBr, $Li_2S$-$P_2S_5$-$Li_2O$-LiI, and $Li_2S$-$SiS_2$-$P_2S_5$-LiI. The kind of the element constituting the amorphous sulfide-based solid electrolyte can be identified, for example, using an ICP emission spectrometric apparatus.

The shape of the amorphous sulfide-based solid electrolyte is not specifically limited, and is, for example, granular. The mean particle size ($D_{50}$) of the granular amorphous sulfide-based solid electrolyte is, for example, within a range of 0.01 $\mu$m to 500 $\mu$m, or 0.1 to 200 $\mu$m.

[Heating]

The production method for the solid electrolyte of this embodiment may further include heating. By further heating, the amorphous solid electrolyte may be converted into a crystalline solid electrolyte.

The heating temperature may be appropriately selected depending on the structure of the amorphous solid electrolyte, and may be, for example, within a range of the peak top, as a starting point, of the endothermic peak observed on the lowest temperature side in differential thermal analysis of the amorphous solid electrolyte under a heating rate of 10°C/min, preferably $\pm$ 40°C, more preferably $\pm$ 30°C, even more preferably $\pm$ 20°C.

More specifically, the heating temperature is preferably 150°C or higher, more preferably 170°C or higher, even more preferably 190°C or higher. On the other hand, the upper limit of the heating temperature is not specifically limited, and is preferably 300°C or lower, more preferably 280°C or lower, even more preferably 250°C or lower.

The heating time is not specifically limited so far as a desired crystalline solid electrolyte can be produced within the time, and is, for example, preferably 1 minute or more, more preferably 10 minutes or more, even more preferably 30 minutes or more, and the upper limit of the heating time is not specifically limited, and is preferably 24 hours or less, more preferably 10 hours or less, even more preferably 5 hours or less.

Preferably, the heating is carried out in an inert gas atmosphere (for example, nitrogen atmosphere, argon atmosphere), or a reduced-pressure atmosphere (especially in vacuum). This is because the crystalline solid electrolyte can be prevented from being degraded (for example, oxidized). The heating method is not specifically limited, and for example, a method of using a vacuum heating apparatus, an argon gas atmosphere furnace or a baking furnace may be employed. Industrially, a horizontal drying machine, a horizontal shaking flow drying machine or the like having a heating means and a feeding mechanism may also be employed.

[Crystalline Sulfide-Based Solid Electrolyte]

As described above, a crystalline sulfide-based solid electrolyte can be obtained by heating an amorphous sulfide-based solid electrolyte. The crystalline sulfide-based solid electrolyte is a sulfide-based solid electrolyte whose X-ray diffraction pattern in X-ray diffractometry shows peaks derived from the sulfide-based solid electrolyte, irrespective of the presence or absence of peaks derived from the raw materials for the sulfide-based solid electrolyte therein. Specifically, the crystalline sulfide-based solid electrolyte contains a crystal structure derived from the sulfide-based solid electrolyte, and a part thereof may be a crystal structure derived from the sulfide-based solid electrolyte or all thereof may be a crystal structure derived from the sulfide-based solid electrolyte. With that, the crystalline sulfide-based solid electrolyte may contain, as a part thereof, an amorphous sulfide-based solid electrolyte so far as it has the X-ray diffraction pattern as mentioned above.

More specifically, examples of the crystal structure of the crystalline solid electrolyte include an $Li_3PS_4$ crystal structure, an $Li_4P_2S_6$ crystal structure, an $Li_7PS_6$ crystal structure, and a crystal structure having peaks at around $2\theta = 20.2°$ and $23.6°$ (for example, JP-2013-16423A).

Here, the crystal structure having peaks at around $2\theta = 20.2°$ and $23.6°$ is preferred. For example, it is a crystal structure having peaks at $2\theta = 20.2° \pm 0.3°$ and $23.6° \pm 0.3°$.

The shape of the crystalline sulfide-based solid electrolyte is not specifically limited, and is, for example, granular. The mean particle size ($D_{50}$) of the granular crystalline sulfide-based solid electrolyte is, for example, within a range of 0.01 $\mu$m to 500 $\mu$m, or 0.1 to 200 $\mu$m.

The sulfide-based solid electrolyte obtained according to the production method of this embodiment has a high ion conductivity and excellent battery performance and is favorably used for batteries. Use of a lithium element as the conductor species is especially preferred. The sulfide-based solid electrolyte obtained according to the production method of this embodiment may be used as a positive electrode layer or a negative electrode layer, or may also be used as an electrolyte layer. Each layer may be produced according to a known method.

Preferably, the battery has a collector in addition to the positive electrode layer, the electrolyte layer and the negative electrode layer, and the collector may be any known one. For example, a layer of Au, Pt, Al, Ti, or a layer formed by coating one reactive with the sulfide-based solid electrolyte, such as Cu, with Au or the like may be used.

Examples

Next, the present invention is described specifically with reference to Examples, but the present invention is not whatsoever restricted by these Examples.

(Example 1)

A planetary ball mill (trade name: Classic Line P-7, manufactured by Fritsch Japan Co., Ltd.) was set up. 0.598 g of lithium sulfide, 0.867 g of diphosphorus pentasulfide, 0.271 g of lithium bromide, and 0.264 g of iodine were weighed, put into a container (45 cc, made of zirconia) for the planetary ball mill, and further 4 g of dewatered toluene (water content: 10 ppm or less) was put thereinto, and the container was completely sealed up. This container was set in the planetary ball mill, and driven for simultaneous mixing, stirring and grinding at a table rotation number of 500 rpm for 40 hours to prepare a sulfide-based solid electrolyte.

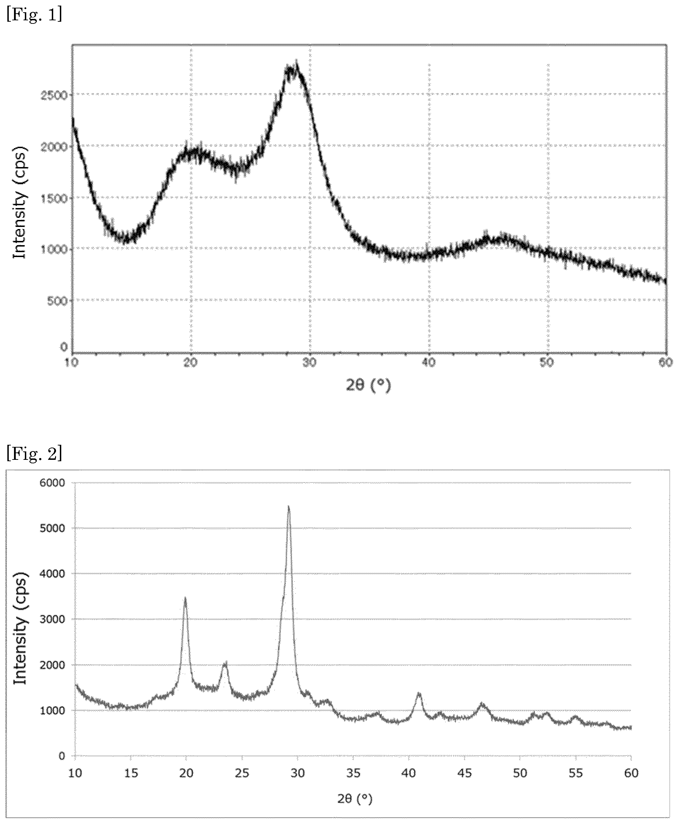

5 ml of dewatered toluene was added to the product containing the resultant, amorphous sulfide-based solid electrolyte and the solvent, in a glove box, and collected in a metal vat, and after a powder (solid electrolyte) precipitated, the supernatant solvent was removed. Next, the precipitated powder was put on a hot plate and dried at 80°C to give a powdery amorphous sulfide-based solid electrolyte. The resultant, powdery amorphous sulfide-based solid electrolyte was analyzed through powdery X-ray diffraction (XRD) using an X-ray diffractometer (XRD) (Smart Lab Apparatus, manufactured by Rigaku Corporation). Any other peak than the peaks derived from the raw materials was detected. The X-ray diffraction spectrum is shown in Fig. 1.

The resultant powdery amorphous sulfide-based solid electrolyte was heated on a hot plate set in a glove box, at 203°C for 3 hours.

The heated powder was analyzed through powdery X-ray diffraction (XRD) using an X-ray diffractometer (XRD) (Smart Lab Apparatus, manufactured by Rigaku Corporation). The X-ray diffraction spectrum is shown in Fig. 2. As shown in Fig. 2, crystallization peaks were detected at $2\theta = 19.9°$, $23.6°$, which confirmed formation of a crystalline sulfide-based solid electrolyte.

(Measurement of Sulfur Solubility)

50 mL of toluene was added to 10 g of sulfur, conditioned at 25°C in an oil bath, and stirred for 2 hours. Subsequently, the supernatant was separated using a cannula (transport pipe) equipped with a glass filter. The separated supernatant was vacuumed to give dry sulfur. From the mass of the dry sulfur and the mass of toluene in which the dry sulfur dissolved, the sulfur solubility (% by mass) was calculated. The sulfur solubility in toluene was confirmed to be 2% by mass.

(Measurement of Ion Conductivity)

The resultant crystalline sulfide-based solid electrolyte was molded to give circular pellets each having a diameter of 10 mm (cross section S: 0.785 cm$^2$) and a height (L) of 0.1 to 0.3 cm to be samples. Electrode terminals were led from top and bottom of each sample to measure the ion conductivity of the sample according to an AC impedance method at 25°C (frequency range: 5 MHz to 0.5 Hz, amplitude: 10 mV) to draw a Cole-Cole plot. At around the right end of the arc observed in the high-frequency side region, the real number part Z' ($\Omega$) at the point at which -Z" ($\Omega$) is the smallest is referred to as the bulk resistance R ($\Omega$) of the electrolyte, and the ion conductivity $\sigma$ (S/cm) was calculated according to the following equation.

$$R = \rho(L/S)$$

$$\sigma = 1/\rho$$

As a result of measurement, the ion conductivity of the crystalline sulfide-based solid electrolyte was 4.84 $\times$ $10^{-3}$ (S/cm), and the electrolyte was confirmed to have a high ion conductivity. The condition and the ion conductivity in Example 1 are shown in Table 1.

(Example 2)

A sulfide-based solid electrolyte was produced using the apparatus shown in Fig. 3. The apparatus shown in Fig. 3 is described. The apparatus shown in Fig. 3 is provided with a bead mill 10 where raw materials are mixed, stirred and ground or processed through treatment of these as combined, and a reactor 20. The reactor 20 is provided with a container 22 and a stirrer 24, and the stirrer 24 is driven by a motor (M).

The bead mill 10 is equipped with a heater 30 around the mill 10, in which hot water (HW) may run through, and the hot water (HW) supplies heat via the heater 30. The hot water (RHW) discharged out through the outlet of the heater 30 is, after heated, externally circulated into the heater 30 as hot water (HW). The reactor 20 is put in an oil bath 40. The oil bath 40 heats the raw materials and the solvent in the container 22 up to a predetermined temperature. A condenser pipe 26 for cooling and liquefying the vaporized solvent is attached to the reactor 20, and the cooling water (CW) cools the solvent in the condenser pipe 26. The cooling water (RCW) discharged out through the outlet of the condenser pipe 26 is, after cooled, externally circulated into the condenser pipe 26 as cooling water (CW).

The bead mill 10 and the reactor 20 are connected via a first connecting pipe line 50 and a second connecting pipe line 52. The first connecting pipe line 50 transfers the raw materials and the solvent in the bead mill 10 toward the reactor 20, and the second connecting pipe line 52 transfers the raw materials and the solvent in the reactor 20 toward the bead mill 10. Since the raw materials and others are circulated via the connecting pipe lines 50 and 52, a pump 54 (for example, a diaphragm pump) is arranged in the second connecting pipe line 52. A thermometer (Th) is arranged in the reactor 20 and in the course of ejection from the pump 54 for constant temperature control.

In this Example, as a bead mill, "Bead Mill LMZ015" (manufactured by Ashizawa Finetech Ltd.) was used, and 485 g of zirconia balls each having a diameter of 0.5 mm were put thereinto. As a reactor, a 2.0-liter glass reactor equipped with a stirrer was used.

34.77 g of lithium sulfide and 45.87 g of diphosphorus pentasulfide were put into the reactor 20, and 1,000 ml of dewatered toluene was added thereto to give a slurry. The slurry in the reactor 20 was circulated at a flow rate of 600 ml/min using the pump 54, and the bead mill 10 was started to be driven at a peripheral speed of 10 m/s. Subsequently 13.97 g of iodine (Wako Pure Chemical Corporation, special grade) and 13.19 g of bromine (Wako Pure Chemical Corporation, special grade) dissolved in 200 ml of dewatered toluene were put into the reactor 20.

After addition of iodine and bromine, the peripheral speed of the bead mill was changed to 12 m/s, and hot water (HW) was applied thereto in a mode of external circulation, and the reaction was carried out in such a manner that the ejection temperature of the pump 54 could be kept at 70°C. After the supernatant of the resultant slurry was removed, the residue was put on a hot plate, and dried thereon at 80°C to give a powdery amorphous sulfide-based solid electrolyte. The resultant sulfide-based solid electrolyte was analyzed through powdery X-ray diffractometry (XRD) in the same manner as in Example 1, and any other peak than the peaks derived from the raw materials was not detected.

The resultant, powdery amorphous sulfide-based solid electrolyte was heated at 195°C for 3 hours using a hot plate set in a glove box, thereby giving a crystalline sulfide-based solid electrolyte. In powdery X-ray diffractometry (XRD) of the product, crystallization peaks were detected at $2\theta = 19.9°$, 23.6° like in Example 1, which confirmed production of a crystalline sulfide-based solid electrolyte. The ion conductivity of the resultant crystalline sulfide-based solid electrolyte was measured according to the above (for measurement of ion conductivity), and was 5.55 $\times$ $10^{-3}$ (S/cm), which confirmed that the solid electrolyte has a high ion conductivity. The condition and the ion conductivity in Example 2 are shown in Table 1.

(Example 3)

An amorphous sulfide-based solid electrolyte was produced in the same manner as in Example 2, except that in Example 2, 35.64 g of lithium sulfide, 49.25 g of diphosphorus pentasulfide, 14.06 g of iodine and 8.85 g of bromine were used. The resultant sulfide-based solid electrolyte was analyzed through powdery X-ray diffractometry in the same manner as in Example 1, which confirmed absence of any other peak than the peaks derived from the raw materials.

The resultant amorphous sulfide-based solid electrolyte was heated at 203°C for 3 hours to give a crystalline sulfide-based solid electrolyte. In powdery X-ray diffractometry (XRD) of the product, crystallization peaks were detected at $2\theta = 19.9°$, $23.6°$ like in Example 1, which confirmed production of a crystalline sulfide-based solid electrolyte. The ion conductivity of the resultant crystalline sulfide-based solid electrolyte was measured, and was $5.01 \times 10^{-3}$ (S/cm), which confirmed that the solid electrolyte has a high ion conductivity. The condition and the ion conductivity in Example 3 are shown in Table 1.

(Example 4)

A sulfide-based solid electrolyte was produced in the same manner as in Example 1, except that in Example 1, 0.645 g of lithium sulfide, 0.851 g of diphosphorus pentasulfide, 0.245 g of bromine, and 0.259 g of iodine were used, and the solvent was changed from dewatered toluene to dewatered ethylbenzene (water content: 10 ppm or less). 20 ml of dewatered toluene was added to the resultant slurry product containing the sulfide-based solid electrolyte and the solvent, and collected in a 50-ml Schlenk bottle, and after powder precipitation, the supernatant solvent was removed. This operation was repeated further twice, and then while heated at 100°C in an oil bath, this was dried under reduced pressure using a vacuum pump to give an amorphous sulfide-based solid electrolyte. The resultant sulfide-based solid electrolyte was analyzed through powdery X-ray diffractometry (XRD) in the same manner as in Example 1, which confirmed absence of any other peak than the peaks derived from the raw materials.

The resultant amorphous sulfide-based solid electrolyte was heated at 180°C for 3 hours to give a crystalline sulfide-based solid electrolyte. In powdery X-ray diffractometry (XRD) of the product, crystallization peaks were detected at $2\theta = 19.9°$, $23.6°$ like in Example 1, which confirmed production of a crystalline sulfide-based solid electrolyte. The ion conductivity of the resultant crystalline sulfide-based solid electrolyte was measured, and was $5.27 \times 10^{-3}$ (S/cm), which confirmed that the solid electrolyte has a high ion conductivity. The condition and the ion conductivity in Example 4 are shown in Table 1.

(Example 5)

An amorphous sulfide-based solid electrolyte was produced in the same manner as in Example 4, except that in Example 4, the solvent was changed from dewatered ethylbenzene to dewatered xylene (water content: 10 ppm or less). The resultant sulfide-based solid electrolyte was analyzed through powdery X-ray diffractometry (XRD) in the same manner as in Example 1, which confirmed absence of any other peak than the peaks derived from the raw materials.

The resultant amorphous sulfide-based solid electrolyte was heated at 188°C for 3 hours to give a crystalline sulfide-based solid electrolyte. In powdery X-ray diffractometry (XRD) of the product, crystallization peaks were detected at $2\theta = 19.9°$, $23.6°$ like in Example 1, which confirmed production of a crystalline sulfide-based solid electrolyte. The ion conductivity of the resultant crystalline sulfide-based solid electrolyte was measured, and was $5.29 \times 10^{-3}$ (S/cm), which confirmed that the solid electrolyte has a high ion conductivity. The condition and the ion conductivity in Example 5 are shown in Table 1.

(Comparative Example 1)

An amorphous sulfide-based solid electrolyte was produced in the same manner as in Example 2, except that in Example 2, 29.66 g of lithium sulfide and 47.83 g of diphosphorus pentasulfide were used, and in place of 13.97 g of iodine (Wako Pure Chemical Corporation, special grade) and 13.19 g of bromine (Wako Pure Chemical Corporation, special grade) dissolved in 200 ml of toluene, 14.95 g of lithium bromide, 15.36 g of lithium iodide and 1200 ml of dewatered toluene were put into the reactor 20. The resultant sulfide-based solid electrolyte was analyzed through powdery X-ray diffractometry (XRD) in the same manner as in Example 1, in which any other peak than the peaks derived from the raw materials was not detected, and which confirmed that the product was an amorphous sulfide-based solid electrolyte.

The resultant amorphous sulfide-based solid electrolyte was heated at 203°C for 3 hours to give a crystalline sulfide-based solid electrolyte. In powdery X-ray diffractometry (XRD) of the product, crystallization peaks were detected at $2\theta = 19.9°$, $23.6°$ like in Example 1, which confirmed production of a crystalline sulfide-based solid electrolyte. The ion conductivity of the resultant crystalline sulfide-based solid electrolyte was measured, and was $4.76 \times 10^{-3}$ (S/cm),

which confirmed that the ion conductivity thereof was not so high like that of the ion conductivity of the crystalline sulfide-based solid electrolytes of Examples 1 to 3. The condition and the ion conductivity in Comparative Example 1 are shown in Table 1.

(Comparative Example 2)

An amorphous sulfide-based solid electrolyte was produced in the same manner as in Example 2, except that in Example 2, 31.58 g of lithium sulfide and 50.93 g of diphosphorus pentasulfide were used, and in place of 13.97 g of iodine (Wako Pure Chemical Corporation, special grade) and 13.19 g of bromine (Wako Pure Chemical Corporation, special grade) dissolved in 200 ml of toluene, 9.95 g of lithium bromide, 15.33 g of lithium iodide and 1200 ml of dewatered toluene were put into the reactor 20. The resultant sulfide-based solid electrolyte was analyzed through powdery X-ray diffractometry (XRD) in the same manner as in Example 1, in which any other peak than the peaks derived from the raw materials was not detected, and which confirmed that the product was an amorphous sulfide-based solid electrolyte.

The resultant amorphous sulfide-based solid electrolyte was heated at 203°C for 3 hours to give a crystalline sulfide-based solid electrolyte. In powdery X-ray diffractometry (XRD) of the product, crystallization peaks were detected at $2\theta = 19.9°$, 23.6° like in Example 1, which confirmed production of a crystalline sulfide-based solid electrolyte. The ion conductivity of the resultant crystalline sulfide-based solid electrolyte was measured, and was $4.36 \times 10^{-3}$ (S/cm), which confirmed that the ion conductivity thereof was not so high like that of the ion conductivity of the crystalline sulfide-based solid electrolytes of Examples 1 to 3. The condition and the ion conductivity in Comparative Example 2 are shown in Table 1.

Table 1

| | Grinding Machine | Solvent | Blending Ratio of Raw Materials (by mol)[*1] | Halogen Compound 1 | Halogen Compound 2 | Lithium Sulfide Molar Number Proportion[*2] | Substance $X_2$ Content[*3] | Ion Conductivity S/cm |
|---|---|---|---|---|---|---|---|---|
| Example 1 | ball mill | toluene | 61.25:18.75:5.0:15.0 | iodine | lithium bromide | 75 | 4.25 | $4.84 \times 10^{-3}$ |
| Example 2 | bead mill | toluene | 68.75:18.75:5.0:7.5 | iodine | bromine | 75 | 12.5 | $5.55 \times 10^{-3}$ |
| Example 3 | bead mill | toluene | 70:20:5:5 | iodine | bromine | 75 | 10.0 | $5.01 \times 10^{-3}$ |
| Example 4 | ball mill | ethylbenzene | 68.75:18.75:5.0:7.5 | iodine | bromine | 75 | 12.5 | $5.27 \times 10^{-3}$ |
| Example 5 | ball mill | xylene | 68.75:18.75:5.0:7.5 | iodine | bromine | 75 | 12.5 | $5.29 \times 10^{-3}$ |
| Comparative Example 1 | bead mill | toluene | 56.25:18.75:10.0:15.0 | lithium iodide | lithium bromide | 75 | 0 | $4.76 \times 10^{-3}$ |
| Comparative Example 2 | bead mill | toluene | 60:20:10:10 | lithium iodide | lithium bromide | 75 | 0 | $4.36 \times 10^{-3}$ |

*1: This is a blending ratio (by mol) of the raw materials of lithium sulfide, diphosphorus pentasulfide, halogen compound 1 and halogen compound 2.

*2: This is a ratio of the molar number of lithium sulfide ($Li_2S$) excluding lithium sulfide ($Li_2S$) of the same molar number as the molar number of the substance $X_2$, to the total molar number of lithium sulfide ($Li_2S$) and diphosphorus pentasulfide ($P_2S_5$) excluding lithium sulfide ($Li_2S$) of the same molar number as the molar number of the substance $X_2$.

*3: This is a content (mol%) of the substance $X_2$ relative to the total amount of alkali metal sulfide, phosphorus compound and substance $X_2$.

EP 3 432 319 A1

Examples 1 to 5 confirmed that, according to the production method for a solid electrolyte of this embodiment, sulfide-based solid electrolytes having a high ion conductivity and excellent in battery performance can be obtained with ease. More specifically, comparison between Example 2 and Comparative Example 1 and comparison between Example 3 and Comparative Example 2 confirmed that, even when the same elements are used, the sulfide-based solid electrolytes produced according to the production method of this embodiment have a higher ion conductivity.

Industrial Applicability

According to the production method for a solid electrolyte of this embodiment, a solid electrolyte having a high ion conductivity and excellent in battery performance can be produced not going through a step of removing water such as a drying step, while simplifying the production process and reducing the production cost. The solid electrolyte is favorably used for batteries, especially for batteries used in information-related equipments and communication instruments such as personal computers, video cameras, and mobile phones.

## Claims

1. A method for producing a sulfide-based solid electrolyte, comprising causing a reaction of an alkali metal sulfide and a substance represented by the following formula (1) through treatment of mixing, stirring, grinding or a combination thereof, in the absence of a solvent or in a solvent except for water:

$$X_2 \ldots (1)$$

wherein X represents a halogen element.

2. A method for producing a sulfide-based solid electrolyte, comprising causing a reaction of an alkali metal sulfide, a phosphorus compound and a substance represented by the following formula (1) through treatment of mixing, stirring, grinding or a combination thereof, in the absence of a solvent or in a solvent except for water:

$$X_2 \ldots (1)$$

wherein X represents a halogen element.

3. The method for producing a sulfide-based solid electrolyte according to claim 1 or 2, wherein the treatment of mixing, stirring, grinding or a combination thereof is carried out using a grinding machine.

4. The method for producing a sulfide-based solid electrolyte according to claim 3, wherein the grinding machine is a container-driven grinding machine or a medium-stirring grinding machine.

5. The method for producing a sulfide-based solid electrolyte according to any one of claims 2 to 4, wherein the phosphorus compound is phosphorus sulfide.

6. The method for producing a sulfide-based solid electrolyte according to any one of claims 1 to 5, wherein the alkali metal sulfide is at least one selected from lithium sulfide and sodium sulfide.

7. The method for producing a sulfide-based solid electrolyte according to any one of claims 1 to 6, wherein the substance is at least one selected from iodine and bromine.

8. The method for producing a sulfide-based solid electrolyte according to any one of claims 2 to 7, wherein the content of the substance $X_2$ relative to the total amount of the alkali metal sulfide, the phosphorus compound and the substance $X_2$ is from 1 to 50 mol%.

9. The method for producing a sulfide-based solid electrolyte according to any one of claims 2 to 8, wherein the alkali metal sulfide is lithium sulfide, the phosphorus compound is diphosphorus pentasulfide, and the ratio of the molar number of lithium sulfide excluding the same molar number of lithium sulfide as the molar number of the substance

$X_2$ relative to the total molar number of lithium sulfide and diphosphorus pentasulfide excluding the same molar number of lithium sulfide as the molar number of the substance $X_2$ is from 60 to 90%.

10. The method for producing a sulfide-based solid electrolyte according to any one of claims 1 to 9, comprising causing the reaction in a solvent in which the solubility of sulfur is 0.01% by mass or more.

11. The method for producing a sulfide-based solid electrolyte according to claim 10, wherein the solvent is an organic solvent.

12. The method for producing a sulfide-based solid electrolyte according to claim 10 or 11, wherein the solvent is a hydrocarbon solvent.

[Fig. 1]

[Fig. 2]

[Fig. 3]

## INTERNATIONAL SEARCH REPORT

| International application No. |
| --- |
| PCT/JP2017/010153 |

**A. CLASSIFICATION OF SUBJECT MATTER**
*H01B13/00*(2006.01)i, *C03B8/00*(2006.01)i, *C03C3/32*(2006.01)i, *C03C4/14*
(2006.01)i, *C03C10/16*(2006.01)i, *H01M10/0562*(2010.01)i

According to International Patent Classification (IPC) or to both national classification and IPC

**B. FIELDS SEARCHED**

Minimum documentation searched (classification system followed by classification symbols)
H01B13/00, C03B8/00, C03C3/32, C03C4/14, C03C10/16, H01M10/0562

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2014/192309 A1 (Idemitsu Kosan Co., Ltd.), 04 December 2014 (04.12.2014), & US 2016/0104917 A1 & EP 3007181 A1 | 1–12 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 11 April 2017 (11.04.17) | 25 April 2017 (25.04.17) |

| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005228570 A
- JP 2013201110 A
- JP 2013103851 A
- JP 2013256416 A
- JP 2014065637 A
- JP 2014065638 A

- JP 7330312 A
- JP 9283156 A
- JP 2010163356 A
- JP 9278423 A
- JP 2013016423 A